# DEMANDE DE BREVET EUROPEEN

(11) **EP 0 872 357 A1**
(43) Date de publication de la demande: **21.10.1998**
(21) Numéro de dépôt: 98106463.7
(22) Date de dépôt: 08.04.1998
(51) Int. Cl.: B60B 5/02, B60B 1/00

(54) **Ame d'un rayon pour roue à rayons, rayon et roue de bicyclette**

(30) Priorité: 16.04.1997 FR 9704862
(71) Demandeur: MAVIC S.A., 01990 Saint-Trivier sur Moignans (FR)
(72) Inventeur: Mercat, Jean-Pierre, 01990 Chaneins (FR)
(74) Mandataire: Lejeune, Benoit

(57) **Abrégé**

L'invention concerne une âme de rayon pour une roue de cycle à rayons sollicités en traction. L'âme comprend une boucle fermée continue (8) de forme oblongue comprenant deux portions droites (9, 10) reliées par deux portions arrondies (11, 12). La boucle comprend un enroulement d'une fibre composite noyé dans une matrice.

L'invention concerne également un rayon, un moyeu, et des attaches de liaison du rayon à la jante et/ou au moyeu.

L'invention concerne aussi une roue de cycle.

## Description

L'invention concerne l'âme d'un rayon et un rayon Pour une roue à rayons travaillant à la traction, notamment une roue de bicyclette. L'invention concerne également une attache de rayon, un moyeu prévu pour coopérer avec des rayons conformes à l'invention, ainsi qu'une roue équipée du moyeu, des attaches et des rayons.

Les roues à rayons actuelles pour bicyclettes ont généralement des rayons réalisés à partir d'une fine tige d'inox, qui présente à un bout une tête élargie, et à l'autre bout une zone filetée prévue pour coopérer avec un écrou.

La principale qualité d'un rayon est sa tenue à l'allongement, et sa résistance à la rupture sous l'effet de la traction à laquelle il est soumis. Ceci est défini par la raideur spécifique du matériau utilisé, qui est le rapport entre son module d'élasticité et sa densité.

Un autre paramètre à prendre en compte est le nombre de rayons et le poids de chaque rayon qui sont nécessaires pour obtenir la rigidité désirée de la roue.

Un autre paramètre est le volume et le profil transversal de chaque rayon qui influent sur l'inertie et la pénétration dans l'air de la roue.

On a trouvé que tous les matériaux de type métallique utilisables pour réaliser des rayons avaient une raideur spécifique à peu près équivalente.

D'un autre côté, on sait que les matériaux composites à base de fibres de carbone ou d'un matériau connu sous la dénomination commerciale Kevlar présentent une raideur spécifique bien meilleure que les matériaux métalliques. Ces matériaux sont avantageux, car les rayons sont plus résistants et plus légers.

Dans ce but, la demande de brevet PCT publiée sous le numéro WO 91/13771 décrit un rayon avec une âme en fibres composite.

Le problème de ce type de rayon est le raccordement d'un côté à la jante, de l'autre au moyeu de la roue. La demande de brevet précitée propose de réaliser ces jonctions en mettant en oeuvre des noeuds réalisés à l'extrémité ou la partie centrale de l'âme du rayon, des surmoulages ou des pièces rapportées surmoulées à l'extrémité de l'âme. Or on ne sait pas réaliser un noeud ou un surmoulage qui résiste suffisamment à la traction sans se détendre un tant soit peu, ou bien au moment de la mise sous tension, ou bien au cours de l'utilisation. En outre, ces surmoulages ou noeuds sont relativement complexes à réaliser avec précision aux extrémités de l'âme.

Ainsi, pour ces rayons, l'âme centrale présente des qualités très bonnes de résistance à l'étirement, mais ce sont les liaisons au moyeu et à la jante qui risquent de se détendre ou de rompre.

Un but de l'invention est de proposer une âme de rayon et un rayon améliorés à base de fibre composite qui présentent de très bonnes qualités d'étirement y compris au niveau des extrémités de liaison avec la jante et le moyeu.

Un autre but de l'invention est de proposer une âme de rayon qui présente des extrémités prévues pour un accrochage facile de pièces de liaison avec la jante ou le moyeu.

Un autre but de l'invention est de proposer une roue équipée de rayons, qui soit plus légère et/ou plus rigide principalement en flexion latérale.

D'autres buts et avantages de l'invention apparaîtront au cours de la description qui va suivre.

L'âme de rayon composite selon l'invention est caractérisée par le fait qu'elle comprend un enroulement continu d'une pluralité de spires d'une fibre selon au moins deux portions droites réunies à leurs extrémités par des portions arrondies de renvoi.

Selon une autre caractéristique, l'enroulement est noyé dans une résine.

Le rayon est caractérisé par le fait qu'il comprend une âme réalisée selon un enroulement continu d'une pluralité de spires d'une fibre selon au moins deux portions droites réunies à leurs extrémités par deux portions arrondies de renvoi, et à chaque portion arrondie, une attache de liaison avec la jante et le moyeu comprenant une tige ou une portion de tige engagée à l'intérieur de la portion arrondie.

L'attache de rayon est caractérisée par le fait qu'elle comprend une chape dont l'écartement des branches est prévu pour recevoir l'enroulement, et que les branches de la chape sont prévues pour être reliées par une tige.

Selon une autre caractéristique, l'attache de rayon est caractérisée par le fait qu'elle présente un plot cylindrique percé selon un axe perpendiculaire à sa direction axiale d'un orifice qui se prolonge par une fente débouchante.

Le moyeu est caractérisé par le fait qu'il présente un corps de moyeu transversal, avec, à chaque extrémité deux flasques parallèles dont l'espacement est prévu pour l'engagement d'un enroulement, et, à la périphérie de chacune des flasques, une pluralité d'orifices en regard les uns des autres prévus pour permettre l'engagement de tiges d'attache.

La roue est caractérisée par le fait qu'elle présente un ensemble de rayons tels que définis précédemment, qui relient la jante et le moyeu.

L'invention sera mieux comprise en se référant à la description ci-dessous et aux dessins en annexe qui en font partie intégrante.

La figure 1 montre en perspective l'enroulement d'une âme de rayons selon un premier mode de mise en oeuvre de l'invention.

La figure 2 montre en perspective un rayon selon un mode non limitatif de réalisation de son âme.

La figure 3 montre en section transversale une âme de rayon selon une variante de réalisation.

Les figures 4 à 6 montrent des variantes de réalisation d'une tige.

Les figures 7 à 9 sont relatives à des variantes de réalisation de rayons.

La figure 10 montre en perspective un moyeu prévu pour coopérer avec le rayon de la figure 2.

La figure 11 montre en perspective une pièce d'attache du rayon de la figure 2 à une jante.

La figure 12 représente en perspective une autre pièce d'attache du rayon à la jante ou au moyeu.

La figure 13 représente en perspective et en coupe partielle une autre pièce d'attache.

La figure 14 et la figure 15 illustrent un autre système d'attache utilisable avec les rayons de l'invention.

La figure 16 montre une autre variante de réalisation.

L'âme du rayon selon la présente invention est réalisée au moyen d'une fibre composite de renfort, par exemple une fibre de carbone, de verre ou d'aramide, noyée dans une matrice, qui est par exemple une résine thermodurcissable ou thermoplastique. De façon connue, la fibre de renfort est formée par une multitude de filaments longs enchevêtrés les uns avec les autres.

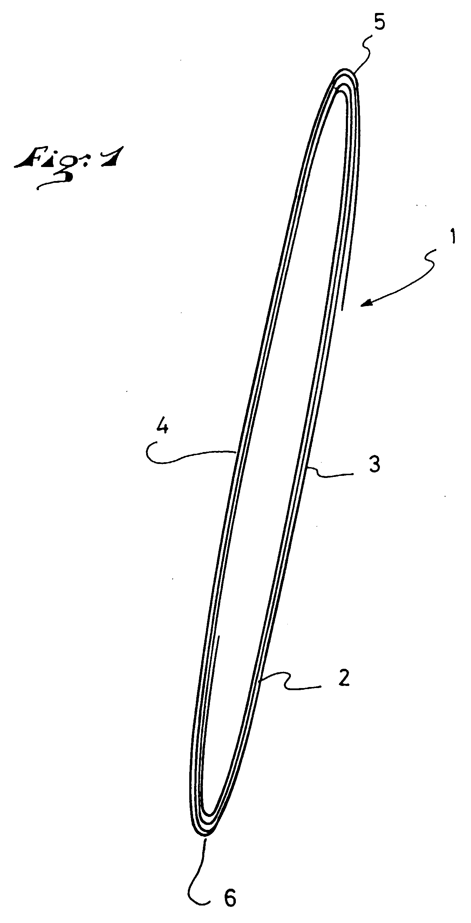

Comme cela est visible dans la figure 1, la fibre de renfort n'est pas préparée selon un faisceau longiligne, mais selon un enroulement continu 1 comprenant un nombre de spires 2 déterminé.

L'enroulement est réalisé de préférence selon deux portions droites parallèles 3 et 4, reliées par deux portions arrondies 5, 6 de renvoi.

Comme cela est représenté sur le dessin, de préférence, le nombre de spires n'est pas un nombre entier, c'est-à-dire que l'extrémité de début et de fin de l'enroulement ne coïncident pas. Selon un mode préférentiel, les extrémités sont situées au niveau des portions droites.

On a obtenu de bons résultats avec une fibre de carbone de 0,22mm² de section enroulée selon 6 spires avec une demie spire supplémentaire pour décaler les extrémités. Naturellement, ces chiffres ne sont pas limitatifs, et l'enroulement pourrait avoir un nombre différent de spires, variant de préférence entre 2 et 10.

L'enroulement est réalisé par tout moyen approprié. Notamment, il est réalisé à l'unité par enroulement d'un fil autour de deux piges. On peut aussi réaliser simultanément plusieurs enroulements. Ainsi, on peut aussi réaliser sur une bobine un enroulement complexe filamentaire ou en nappe, qui est ensuite découpé en enroulements unitaires dans le plan perpendiculaire à l'axe de la bobine.

L'enroulement est enrobé d'une matrice qui assure sa cohésion. Par exemple il s'agit d'une résine thermodurcissable (résine époxy notamment), ou d'une résine thermoplastique qui présente l'avantage de pouvoir façonner ultérieurement le rayon en section.

La figure 2 représente un rayon comprenant une âme 8. L'âme est réalisée avec un enroulement tel que décrit précédemment, enrobé d'une résine qui a durci.

L'âme présente deux portions droites parallèles 9 et 10 reliées par deux portions arrondies de renvoi en demi-cercle 11 et 12, de façon à former une boucle continue fermée de forme oblongue. Il est important de maîtriser la forme interne des portions arrondies en rayon et en section, car cette zone sera soumise à des contraintes très importantes. C'est là en effet que le rayon transmet ses contraintes de traction, et que s'équilibre par ailleurs la tension entre les deux portions droites parallèles. On a obtenu de bons résultats avec un diamètre interne supérieur à 2 millimètres, et de préférence voisin de 3 millimètres.

Un autre paramètre est la largeur de l'âme, c'est-à-dire l'étalement des spires de l'enroulement qui dépend par exemple de la largeur de gorge des piges autour desquelles l'enroulement est réalisé. On a trouvé que la largeur pouvait varier de 1 à 7 millimètres, de préférence elle est voisine de 3 millimètres.

L'enrobage des spires par la résine se fait par tout moyen approprié. Il peut se faire par surmoulage de l'enroulement dans un moule par exemple. Il est aussi possible d'utiliser pour l'enroulement une fibre pultrudée, c'est-à-dire déjà imprégnée d'une résine thermoformable que l'on passe dans une filière chauffante.

A titre indicatif, on a obtenu de bons résultats avec un enroulement tel que précédemment décrit enrobé d'une résine de type époxy, et un coefficient de remplissage de 60% environ, c'est-à-dire qu'en section, la surface des fibres est voisine de 60% de la surface totale du rayon. La longueur du rayon était voisine de 200 millimètres, et les portions arrondies d'extrémité présentaient chacune un diamètre interne de 2 millimètres et une largeur de 5,5 millimètres.

Il va de soi que tous ces chiffres ne sont donnés qu'à titre indicatif, et n'ont pas de caractère limitatif.

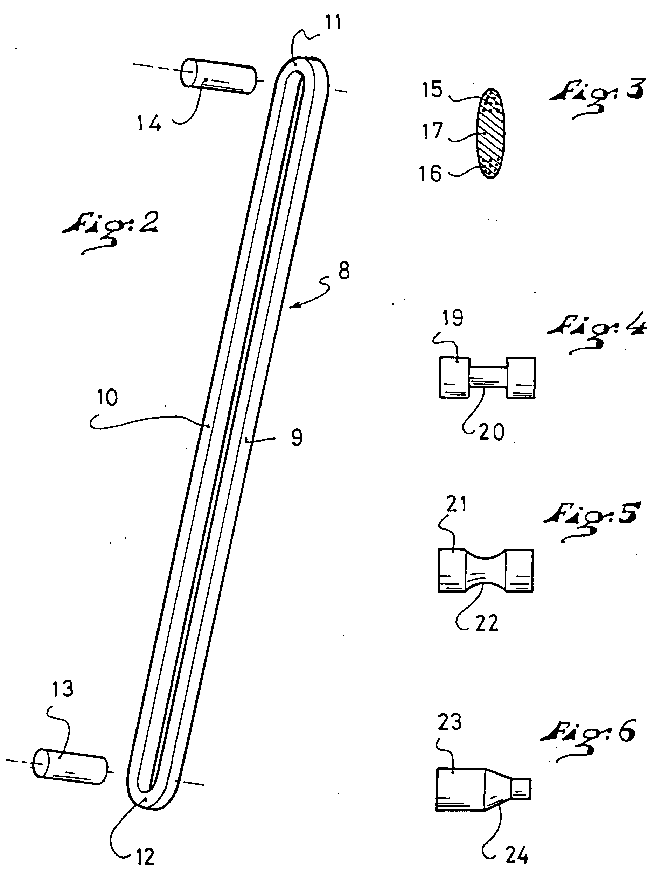

La figure 2 représente les deux portions droites avec une section sensiblement rectangulaire. Ceci n'est pas limitatif non plus, toute forme de section appropriée convient, en particulier une forme aérodynamique. Les deux portions droites peuvent aussi être noyées dans une même masse de résine comme le représente la figure 3. Selon cette figure, les deux portions 15 et 16 sont noyées dans un même bloc 17 de résine, mais les portions arrondies aux extrémités de l'âme sont dégagées pour permettre l'engagement d'un élément de liaison à l'intérieur de l'enroulement.

En revenant à la figure 2, deux tiges 13 et 14 sont représentées. Ces tiges sont prévues pour être engagées à l'intérieur de la bouche de l'âme 8, et à venir au contact de chacune des portions arrondies 11 et 12 pour assurer la transmission d'efforts vers la jante ou le moyeu de la roue. Ainsi les deux tiges sont engagées à l'intérieur de l'enroulement. L'âme du rayon travaille comme un anneau ou une boucle fermée, et non comme une tige.

La figure 2 représente deux tiges cylindriques de révolution dont le diamètre est égal au diamètre interne de chacune des portions arrondies, afin d'avoir une surface de contact aussi étendue que possible entre les éléments.

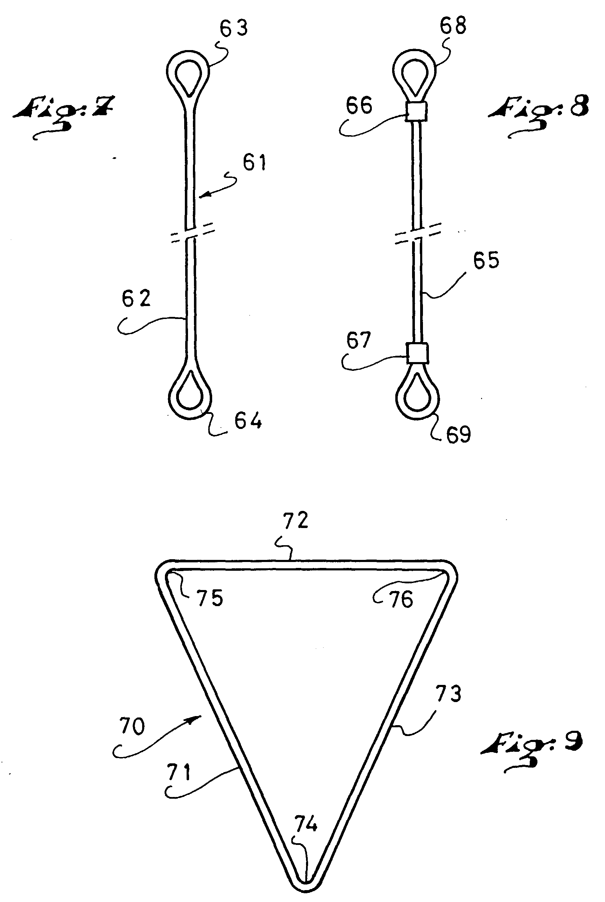

En variante, la figure 4 représente une tige 19 de diamètre supérieur, avec une gorge centrale 20 de diamètre égal au diamètre interne des portions 11 ou 12.

Egalement, la figure 5 représente une tige 21 avec une gorge 22 de section arrondie. Dans ce dernier cas, les deux portions 11 et 12 auraient en section une forme arrondie correspondante.

La figure 6 représente une tige 23 présentant une zone médiane tronconique 24 qui correspond à la largeur d'un rayon. Cette zone 24 est prévue pour donner naturellement au rayon l'orientation qu'il prend dans la nappe de rayons. Dans ce cas, les portions en demi-cercle de l'âme présentent une forme tronconique complémentaire.

Les tiges n'ont pas nécessairement une forme circulaire en section, de même que les portions arrondies 11 et 12. Toute autre forme arrondie convient, pourvu que la surface de contact des tiges et la surface interne des portions arrondies 11 et 12 se correspondent mutuellement.

En outre, les tiges 13, 14, 19, 21, 23 sont représentées comme des éléments individuels. On pourrait avoir aussi des portions de tiges ou d'autres éléments présentant une surface d'appui de forme complémentaire de celle des portions arrondies.

La figure 7 montre une autre variante de réalisation d'un rayon. Comme dans le cas précédent, le rayon 61 représenté dans cette figure comprend une âme centrale enroulée selon un enroulement continu de spires, et enrobée d'une matrice de résine. Les deux portions droites de l'enroulement ont été réunies au moment de la solidification de la résine, de façon à ne former qu'un seul brin principal 62 qui réunit les deux portions. A chaque extrémité de ce brin, le rayon présente deux portions arrondies 63 et 64 qui définissent intérieurement un oeillet ou anneau d'accrochage avec une tige ou un autre moyen d'attache du rayon. Le brin principal 62 peut présenter extérieurement en section une forme profilée, de façon à favoriser l'aérodynamique du rayon.

La figure 8 représente une variante de réalisation de ce rayon. Selon cette variante, le brin principal 65 présente deux manchons 66 et 67 à sa jonction avec les portions arrondies 68 et 69. Les manchons peuvent être rapportés sur l'extérieur du rayon, comme cela est représenté. Ils pourraient aussi être disposés directement sur l'enroulement, et être noyés dans la résine. Les manchons renforcent la cohésion de l'enroulement dans les zones où les deux côtés des portions arrondies se rejoignent pour former la tige centrale.

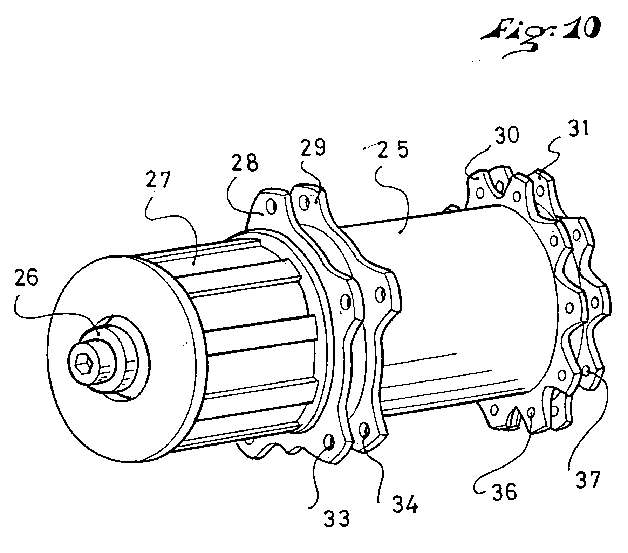

Selon la variante de la figure 9, le rayon 70 est formé non plus selon une forme allongée avec une portion arrondie à chaque extrémité, mais selon une forme en triangle, avec trois portions droites 71, 72, 73 réunies deux à deux par trois portions arrondies 74, 75, 76. Le rayon est prévu pour être utilisé avec trois moyens d'attache situés à chacune de ses portions arrondies, un au moyeu et deux à la jante. Les portions droites, en particulier celles qui joignent le moyeu et la jante peuvent avoir des longueurs différentes. Sur un côté de la roue, les triangles peuvent être prévus pour se chevaucher deux à deux, ou être montés côte à côte sans chevauchement.

Le rayon selon l'invention pourrait aussi être formé selon d'autres géométries complexes. Notamment, il pourrait être formé selon un rectangle, relativement étroit, chaque angle du rectangle étant prévu pour être attaché à la jante, et le rayon étant relié solidairement au moyeu dans la partie médiane des longs côtés droits.

Dans les différents modes de réalisation décrits, le rayon est formé à partir d'un enroulement d'une fibre selon une succession continue de spires.

La figure 10 représente en perspective un moyeu prévu pour être équipé du rayon précédemment décrit. Le moyeu représenté est un moyeu arrière comprenant de façon connue un corps de moyeu 25 monté en rotation libre autour d'un arbre 26, et un corps de roue libre 27 monté rotatif par rapport au corps de moyeu et relié à lui par un mécanisme de roue libre non représenté.

Vers chacune de ses extrémités latérales, le corps de moyeu présente un ensemble de deux flasques 28, 29 et 30, 31. Les flasques de chaque ensemble sont percés à leur périphérie d'orifices tels que 33, 34, 36, 37 situés dans l'alignement les uns des autres. Ces orifices sont prévus pour recevoir les tiges précédemment décrites. L'écartement des flasques est égal à la largeur d'un rayon, ou au double de la largeur d'un rayon, selon le mode de rayonnage et le nombre de rayons souhaité. Eventuellement, l'alignement d'un couple d'orifice est légèrement incliné par rapport à l'axe de rotation du moyeu, pour tenir compte de l'inclinaison du rayon dans sa nappe de rayons.

Dans le mode de réalisation illustré, l'écartement des flasques 28 et 29 est prévu pour recevoir au niveau de chaque couple d'orifices deux rayons de façon à former une nappe à rayons croisés. A l'inverse, les flasques 30, 31 sont prévus pour recevoir un seul rayon à la fois, pour former une nappe de rayons orientés radialement.

Les flasques peuvent être découpés selon des créneaux comme cela est représenté dans la figure 10. Ils pourraient aussi avoir la forme de disques, ou toute autre forme appropriée.

Le moyeu qui vient d'être décrit n'est pas limitatif pour l'invention.

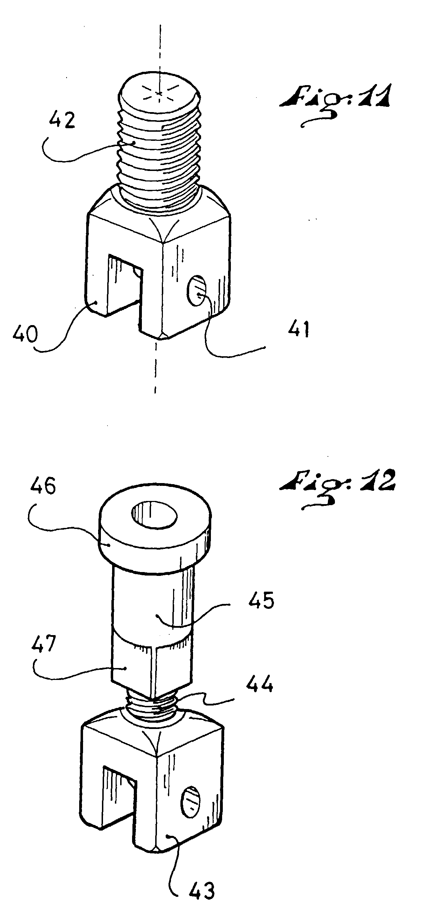

Les figures 11 et suivantes représentent d'autres moyens d'attache des rayons.

De façon générale, ces attaches présentent une chape en forme de U, dont la largeur est prévue pour recevoir un rayon. Une tige traverse les branches de la chape et l'âme du rayon. Du côté opposé à l'ouverture de la chape, l'attache présente un moyen de liaison avec la jante ou le moyeu mettant en oeuvre un filetage, de façon générale.

La figure 11 représente une attache simple comprenant une chape 40 dont les branches sont percées d'un orifice 41 prévu pour une tige. L'attache présente à l'opposé de la chape un segment fileté 42 qui est prévu pour être vissé de façon fixe dans la paroi d'une jante ou d'un corps de moyeu. Une telle attache n'est pas prévue pour ajuster la tension du rayon.

L'attache représentée en figure 12 présente de la même façon une chape 43, un segment fileté 44. Ce segment est prévu pour coopérer avec un écrou 45 à tête 46 élargie. De façon classique, l'écrou est prévu pour être engagé dans un orifice de la paroi de la jante ou bien du corps de moyeu depuis le côté opposé au rayon. L'écrou présente vers son extrémité une zone 47 à section par exemple carrée, qui permet l'accrochage d'un outil de serrage.

La figure 13 représente une autre attache avec un insert creux 50 prévu avec une partie supérieure filetée 51, une zone filetée inférieure 52, et une zone interne 53 à section angulaire, par exemple hexagonale.

L'insert est prévu pour être vissé dans un orifice de la jante ou du corps de moyeu du côté opposé au rayon.

Un écrou 55 est vissé sur la partie filetée 52. L'écrou présente à sa base un épaulement 56 qui supporte la partie médiane d'un élément de liaison 58. La partie supérieure de l'élément 58 présente une portion de section complémentaire de la zone 53. La partie inférieure de l'élément 58 est reliée par exemple par vissage à une chape 60 (les filets ne sont pas représentés dans la figure 12). La rotation de l'écrou 55 entraîne la translation de l'élément de liaison 58, sans cependant induire de contrainte de torsion dans le rayon étant donné le guidage entre la zone 53 et la portion supérieure de l'élément.

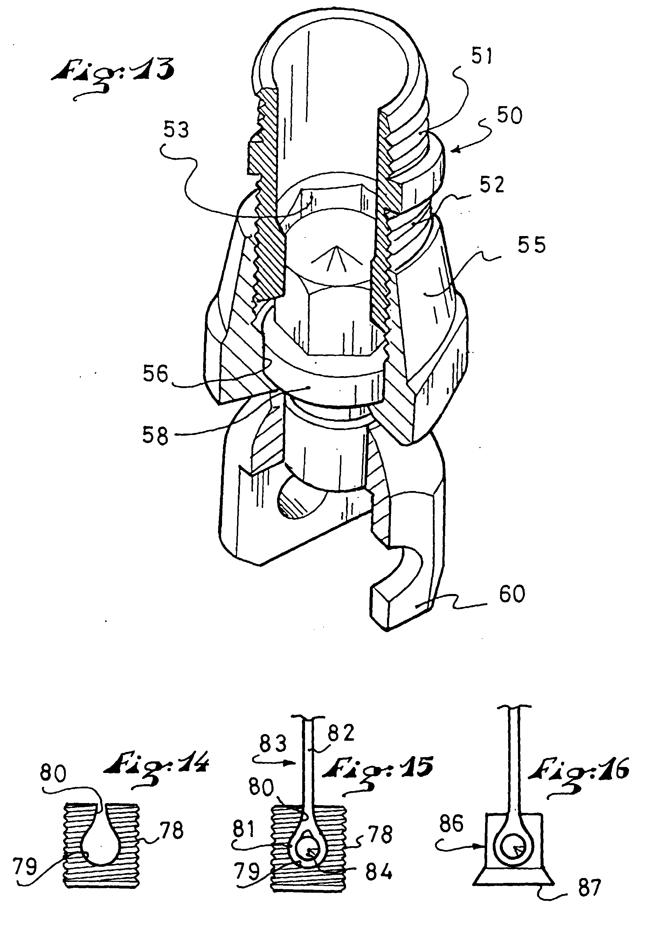

Les figures 14 et 15 illustrent un autre système d'attache, qui est plus particulièrement adapté au mode de réalisation du rayon décrit relativement aux figures 7 et 8. Le moyen d'attache présente un plot cylindrique 78 qui, dans sa partie médiane, est percé d'un orifice 79 selon une direction perpendiculaire à sa direction axiale. L'orifice 79 est accessible de l'extérieur sur au moins un côté du plot, et il se prolonge axialement par une fente débouchante 80 de largeur réduite par rapport à la largeur maximale de l'orifice. Comme cela est visible en figure 15, l'orifice 79 et la fente 80 sont prévus pour recevoir la portion et la base du brin principal 82 d'un rayon 83. Une pige 84 de section appropriée est placée au centre de la portion arrondie 81 de façon à verrouiller le rayon à son moyen d'attache selon une direction longitudinale. Avec un tel moyen d'attache, les efforts longitudinaux sur le rayon sont concentrés non pas sur l'intérieur de la portion arrondie, comme dans les autres cas, mais sur l'extérieur. Globalement, la portion arrondie se comporte comme une tête de retenue, et la pige centrale 84 empêche toute déformation de cette tête.

Selon les figures 15 et 16, le plot 78 est fileté sur l'extérieur, et il est prévu pour être vissé dans une jante ou un autre élément d'un système d'attache. Il faut noter que le montage du plot dans un orifice taraudé évite sa déformation au niveau de l'orifice 79 et de la fente 80, et qu'il renforce le verrouillage du rayon à son moyen d'attache.

La figure 16 montre une autre variante. Selon cette variante, le plot 86 présente une surface externe cylindrique non filetée, avec une sorte de tête fraisée 87. C'est par cette tête que la retenue du plot et de son dispositif d'attache est prévue.

D'autres systèmes d'attache pourraient aussi convenir sans pour autant sortir du cadre de l'invention.

Dans tous les cas, il va de soi que les systèmes d'attache peuvent être différents aux différentes extrémités du rayon.

L'invention permet ainsi de réaliser une roue de bicyclette équipée de rayons plus légers que les rayons traditionnels en inox, et d'une raideur plus grande. Ces rayons peuvent par ailleurs être soumis à une tension supérieure à celle d'un rayon traditionnel. Il est donc possible d'en diminuer le nombre sur une roue.

## Revendications

1. Ame de rayon composite pour une roue à rayons travaillant à la traction, caractérisée par le fait qu'elle comprend un enroulement continu (1) d'une pluralité de spires (2) d'une fibre selon au moins deux portions droites parallèles (3, 4, 15, 16, 62, 65, 71, 72, 73) réunies aux extrémités par deux portions arrondies (5, 6, 63, 64, 68, 69, 74, 75, 76, 77).

2. Ame selon la revendication 1, caractérisée par le fait que l'enroulement (1) est noyé dans une résine de façon à former une boucle continue fermée de forme oblongue, avec deux portions parallèles (9, 10) jointes aux extrémités par deux portions arrondies (11, 12).

3. Ame selon la revendication 1, caractérisée par le fait que les extrémités de début et de fin d'enroulement sont situées au niveau des portions droites (3, 4).

4. Ame selon la revendication 1, caractérisée par le fait que l'enroulement comprend un enroulement avec un nombre de spires compris entre 2 et 10.

5. Ame selon la revendication 2, caractérisée par le fait que les portions arrondies (11, 12) présentent un diamètre intérieur supérieur a deux millimètres.

6. Ame selon la revendication 1, caractérisée par le fait que les portions droites (15, 16) de l'enroulement sont noyées dans un même bloc (17) de résine.

7. Ame selon la revendication 1, caractérisée par le fait que les portions droites sont réunies selon un brin principal (62, 65).

8. Ame selon la revendication 1, caractérisée par le fait qu'elle comprend un enroulement réalisé selon un triangle présentant trois portions droites (71, 72, 73) réunies deux à deux par trois portions arrondies (74, 75, 76).

9. Rayon composite pour une roue à rayons travaillant en traction, caractérisé par le fait qu'il comprend une âme (8) réalisée selon l'une quelconque des revendications 1 à 8 précédentes, et à chaque extrémité, une attache de liaison (14, 15) avec la jante et le moyeu comprenant une tige (13, 14, 19, 21, 23) ou une portion de tige engagée à l'intérieur de l'enroulement continu de l'âme.

10. Moyeu de roue de cycle prévu pour coopérer avec le rayon selon la revendication 9, caractérisé par le fait qu'il présente deux flasques parallèles (28, 29, 30, 31) dont l'écartement est prévu pour permettre l'engagement d'un ou de deux rayons, les flasques étant percés d'orifices (33, 34, 36, 37) placés deux à deux dans l'alignement l'un de l'autre, les orifices étant prévus pour recevoir une tige de liaison.

11. Attache de liaison d'un rayon selon la revendication 9, caractérisée par le fait qu'elle comprend une chape en forme de "U" (40, 43, 60) dont l'écartement des branches est prévu pour permettre l'engagement d'un rayon, et dont les branches sont percées d'un orifice (41) prévu pour la tige de liaison.

12. Attache de liaison d'une âme de rayon selon la revendication 7, caractérisée par le fait qu'elle comprend un plot (78) cylindrique qui est percé selon une direction perpendiculaire a sa direction axiale d'un orifice (79) prolongé par une fente débouchante (80) de largeur réduite.

13. Roue de cycle, caractérisée par le fait qu'elle comprend au moins un rayon selon la revendication 9.
